# EUROPEAN PATENT APPLICATION

(11) **EP 2 657 746 A1**
(43) Date of publication of application: **30.10.2013**
(21) Application number: 12176786.7
(22) Date of filing: 17.07.2012
(51) Int. Cl.: G02B 17/06

(54) **Radiation shielded reflective optical system**

(30) Priority: 27.04.2012 US 201213457769
(71) Applicant: Raytheon Company, Waltham, MA 02451-1449 (US)
(72) Inventor: Cook, Lacy G., Waltham, MA Massachusetts 02451-1449 (US)
(74) Representative: Lawrence, John

(57) **Abstract**

A radiation shielded optical system (100). In one example, a radiation shielded optical system includes a labyrinthine housing (120) having an entrance and defining a cavity, a detector (110) positioned within the cavity of the housing, the housing (120) configured to provide substantially 4-pi steradian radiation shielding for the detector. The optical system further includes a rear-stopped optical sub-system (130) having a rear aperture stop (140) positioned proximate the entrance of the housing and configured to direct an optical beam through the rear aperture stop and the entrance into the housing, and a fold mirror (160) positioned within the housing (120) and configured to reflect the optical beam onto the detector (110).

## Description

### BACKGROUND

Generally, optical elements of long distance telescopes may be refractive or reflective. Refractive optical elements are generally effective in controlling and/or preventing aberrations, and may be used in a variety of applications, including star tracker applications. Reflective optical elements have been used in place of refractive elements in some system, for example, to provide large aperture optical systems. In long distance optical imaging systems the minimum number of optical elements is generally recognized to be three, to provide the minimum number of parameters that are necessary to correct for and/or prevent spherical aberration, coma, astigmatism and field curvature. An optical imaging system composed of three optical elements is known as a triplet.

Reflective optical triplets are generally constructed such that electromagnetic radiation enters the system from a distant object, is received on a primary mirror, is reflected onto a secondary mirror, is received on a tertiary mirror, and finally, is focused on an image plane where an image of the distant object is formed. U.S. Patent Publication No. 2010/0110539 filed November 4, 2008 and titled "REFLECTIVE TRIPLET OPTICAL FORM WITH EXTERNAL REAR APERTURE STOP FOR COLD SHIELDING" describes a reflective triplet configured such that the aperture stop of the optical system is located between the last optical element and the image plane.

### SUMMARY OF INVENTION

Aspects and embodiments are directed to a rear-stopped radiation shielded reflective optical system that may provide up to 4-pi steradian radiation shielding for a detector.

According to one embodiment, a radiation shielded optical system comprises a labyrinthine housing having an entrance and defining a cavity, a detector positioned within the cavity of the housing, the housing configured to provide substantially 4-pi steradian radiation shielding for the detector, a rear-stopped optical sub-system having a rear aperture stop positioned proximate the entrance of the housing and configured to direct an optical beam through the rear aperture stop and the entrance into the housing, and a fold mirror positioned within the housing and configured to reflect the optical beam onto the detector.

In one example, the rear-stopped optical sub-system is a rear-stopped reflective optical sub-system. In one example, the rear-stopped reflective optical system is a reflective triplet. In another example, the reflective triplet includes a positive power primary mirror, a negative power secondary mirror optically coupled to the primary mirror, and a positive power tertiary mirror optically coupled to the secondary mirror. In one example the tertiary mirror receives the optical beam from the secondary mirror and reflects the optical beam through the rear aperture stop. The detector is positioned at an image plane of the optical system, and the rear aperture stop may be positioned approximately equidistant from the image plane and the tertiary mirror along an optical axis of the optical system. In one example the detector is a focal plane array image sensor. In one example the housing comprises a graded-Z laminate material. In another example the housing comprises a tungsten steel laminate. In another example the housing comprises a material selected to shield the detector from ionizing radiation. The radiation shielded optical system may further comprise at least one additional fold mirror positioned within the housing and configured to reflect the optical beam onto the first fold mirror.

Still other aspects, embodiments, and advantages of these exemplary aspects and embodiments are discussed in detail below. Embodiments disclosed herein may be combined with other embodiments in any manner consistent with at least one of the principles disclosed herein, and references to "an embodiment," "some embodiments," "an alternate embodiment," "various embodiments," "one embodiment" or the like are not necessarily mutually exclusive and are intended to indicate that a particular feature, structure, or characteristic described may be included in at least one embodiment. The appearances of such terms herein are not necessarily all referring to the same embodiment.

### BRIEF DESCRIPTION OF THE DRAWINGS

Various aspects of at least one embodiment are discussed below with reference to the accompanying figure, which are not intended to be drawn to scale. The figure is included to provide illustration and a further understanding of the various aspects and embodiments, and is incorporated in and constitutes a part of this specification, but is not intended as a definition of the limits of the invention. In the figures:

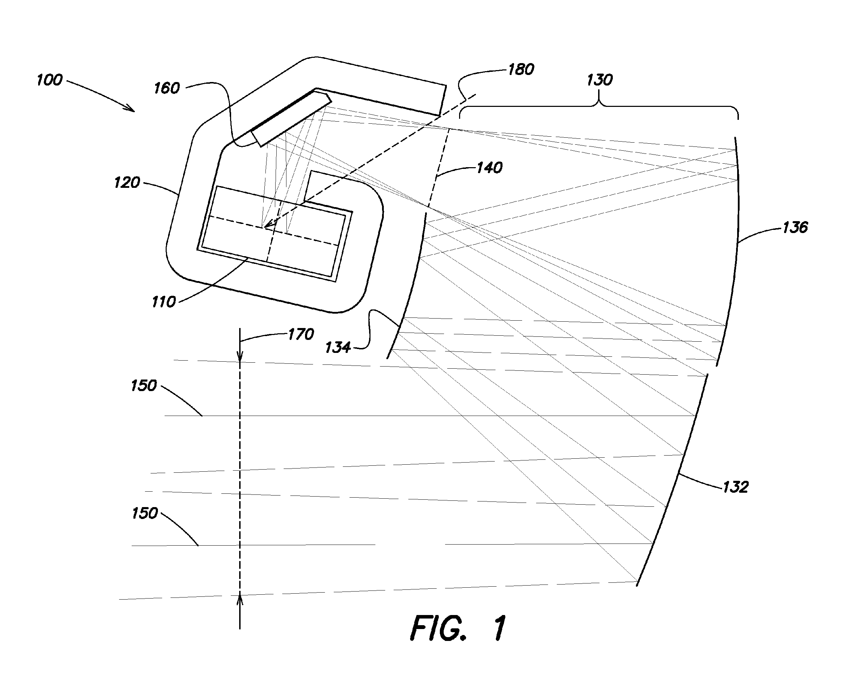

FIG. 1 is a diagram of one example of a radiation shielded reflective optical system according to aspects of the invention.

### DETAILED DESCRIPTION

Aspects and embodiments are directed to an optical imaging system in which the detector is housed within a chamber designed to shield the detector from radiation. In certain applications, for example, long-distance space-based or airborne imaging systems, such as star tracker systems, it is desirable to shield the detector from radiation in order to limit noise and/or false readings that may degrade the imaging performance of the detector. This radiation may include electromagnetic radiation, such as stray light, thermal radiation, and/or gamma rays, as well as particle radiation, such as cosmic rays. Accordingly, in one embodiment, the detector is housed within a chamber composed of a suitable material or materials and having a configuration that shields the detector from such radiation, as discussed further below.

In addition, in many imaging applications where it is desirable to shield the detector from radiation, it is also desirable to minimize the size and weight of the optical system. In one embodiment, the optical system includes a reflective or refractive optical system having a rear aperture stop. In one example, using all-reflecting optical elements, the optical system is configured such that the aperture stop of the optical system is between the last optical element and the image plane. These types of optical systems are referred to as rear-stopped optical systems. With the aperture stop in this position, the image plane, and therefore the detector, may be shielded from radiation more effectively and efficiently than with conventional reflective optical systems having a forward aperture stop or refractive optical systems. In one example, the reflective optical system has a reflective triplet optical form; however, other rear-stopped optical forms may also be used, as discussed further below.

It is to be appreciated that embodiments of the methods and apparatuses discussed herein are not limited in application to the details of construction and the arrangement of components set forth in the following description or illustrated in the accompanying drawings. The methods and apparatuses are capable of implementation in other embodiments and of being practiced or of being carried out in various ways. Examples of specific implementations are provided herein for illustrative purposes only and are not intended to be limiting. Also, the phraseology and terminology used herein is for the purpose of description and should not be regarded as limiting. The use herein of "including," "comprising," "having," "containing," "involving," and variations thereof is meant to encompass the items listed thereafter and equivalents thereof as well as additional items. References to "or" may be construed as inclusive so that any terms described using "or" may indicate any of a single, more than one, and all of the described terms.

Referring to FIG. 1, there is illustrated an example of a rear stopped, radiation shielded optical system according to one embodiment. The system 100 may be used to provide images of distant objects. In this example, the system 100 includes a detector 110 that is contained within a housing 120. The detector may be any type of imaging detector, such as a focal plane array image sensor, for example. The detector 110 is located at an image plane of the system 100. The housing 120 is configured to shield the detector 110 from radiation, such as electromagnetic radiation and/or particle radiation, as discussed further below. The system 100 further includes a reflective optical sub-system 130 having a rear aperture stop 140. In the example illustrated in FIG. 1, the reflective optical sub-system 130 is a reflective triplet. The reflective optical sub-system 130 is configured to direct and focus incoming light 150 from object space through the rear aperture stop 140 toward the housing 120 and detector 110. According to one embodiment, the housing 120 has a "labyrinth" configuration designed to eliminate or at least reduce any direct optical paths to the detector 110 other than those paths that pass through the rear aperture stop 140. Accordingly, in one example, a fold mirror 160 is positioned within the housing 120 to reflect the incoming light rays 150 from the aperture stop 140 onto the detector 110, as discussed further below.

According to one embodiment, the reflective optical sub-system 130 is an all-reflecting, non-relayed optical sub-system. As discussed above, in one embodiment, the reflective optical sub-system 130 is a reflective triplet. As shown in FIG. 1, in one example, the reflective triplet includes a positive power primary mirror 132, a negative power secondary mirror 134, and a positive power tertiary mirror 136. The optical sub-system 130 as illustrated in FIG. 1 includes a virtual entrance pupil 170, wherein the light rays 150 first impinge on the primary mirror 132, reflect off of the primary mirror and impinge on the secondary mirror 134, reflect off of the secondary mirror and impinge on the tertiary mirror 136, and reflect off of the tertiary mirror and impinge on the fold mirror 160. Both conic and general aspheric mirror geometries may be utilized in various embodiments. In addition, embodiments of the all-reflecting triplet may be compact and image distant objects having fields of view comparable to a refracting triplet at larger aperture diameters. Moreover, as with all-reflecting systems, it is lightweight and accurate within a wide range of wavelengths.

U.S. Patent Publication No. 2010/0110539 filed November 4, 2008 and titled "REFLECTIVE TRIPLET OPTICAL FORM WITH EXTERNAL REAR APERTURE STOP FOR COLD SHIELDING,", describes and provides an optical prescription for an example of a reflective triplet which may be used for the reflective optical sub-system 130. However, as discussed above, numerous other rear-stopped reflective or refractive optical forms may be used.

As discussed above, a defining aperture stop 140 of the optical sub-system 130 is located between the tertiary mirror 136 and the image plane at the detector 110. In this position, the detector 110 may be placed inside the housing 120 to be substantially completely shielded from radiation. The external rear aperture stop location naturally results in the virtual entrance pupil 170 shown in FIG. 1. The aperture stop 140 as shown in FIG. 1 may be located slightly above and to the right of the secondary mirror 134, in reference to the tangential plane of the optical sub-system 130. In one example, the aperture stop 140 may be located approximately halfway between the third mirror 136 and the image plane (where the detector 110 is located). The long back focal length and rear aperture stop location of the reflective triplet allow the fold mirror 160 to create a small cavity that can be surrounded by the housing 120, as shown in FIG. 1, to provide a shielded environment for the detector 110.

Still referring to FIG. 1, in one embodiment, the housing 120 is situated with respect to the reflective optical sub-system 130 such that the rear aperture stop 140 is located at or near an outer boundary of the housing 120, in front of the entrance to the housing. Thus, in operation, the beam 150 is directed via the reflective optical sub-system 130 through the rear aperture stop 140 and impinges upon the fold mirror 160. The fold mirror 160 reflects the beam 150 onto the detector 110 at the image plane, where the beam is converted to a signal in accordance with the detector operation and receiver circuitry (not shown). The fold mirror 160 may be sized and arranged within the housing 120 so as direct the beam 150 onto the detector 110 substantially without allowing stray radiation to impinge upon the detector. The size, location and tilt of the fold mirror 160 may be configurable, and may be varied based on the size and shape of the housing 120, for example. The fold mirror 160 may be reasonably flat, have an acceptable optical quality, and be made of a material having characteristics (e.g., coefficient of thermal expansion) suitable for a given application.

The combination of the rear-stopped reflective optical sub-system 130, labyrinthine housing 120 and fold mirror 160 may provide an efficient shielding configuration that may protect the detector 110 from stray radiation from all directions (4-pi steradian). As illustrated in FIG. 1 by line 180, radiation not entering the housing 120 through the rear aperture stop 140 may be blocked from reaching the detector 110 by the shape of the housing and/or arrangement of the fold mirror 160. As will be appreciated by those skilled in the art, given the benefit of this disclosure, the housing 120 may have numerous different configurations, not limited to the configuration illustrated in FIG. 1. For example, the housing may be configured, and the fold mirror 160 positioned, such that the optical beam 150 is folded "up" or out-of-plane, rather than "down" as shown in FIG. 1. In addition, the housing 120 may have a complex labyrinthine shape/configuration, and more than one fold mirror may be used to direct the optical beam 150 to the detector 110. These fold mirrors may be arranged in various configurations and may direct the optical beam in the same or different planes, depending, for example, on the shape of the housing and/or placement of the mirrors.

The housing 120 may be constructed from a material suitable for shielding against electromagnetic radiation and/or particle radiation. For example, the housing may include a tungsten steel laminate. In one example, the housing may be constructed in accordance with a graded-Z laminate approach. Graded-Z shielding is a laminate of several materials with different Z values (atomic numbers) designed to protect against ionizing radiation. Graded-Z shielding may provide more effective shielding compared to single-material shielding of the same mass. In one example, a graded-Z housing may include multiple layers of materials from an outer layer of a high-Z material, such as tantalum, through successively lower-Z materials (e.g., tin, steel, copper), to an inner layer of a low-Z material, such as aluminum, polypropylene or boron carbide, for example. Thus, the overall structure has a Z-gradient from the outer layer through to the inner layer. The high-Z outer layer effectively scatters protons and electrons, and may also absorb gamma rays, which produce X-ray fluorescence. Each subsequent layer absorbs the X-ray fluorescence of the previous material, eventually reducing the energy to a level that is not harmful to the detector 110. The shielding provided by the housing 120 may further enhance the inherent radiation hardness of CMOS-based detectors, for example, and provide protection for detectors in applications where radiation hardness may be an important consideration.

The above-discussed aspects and embodiment relate to shielding an optical detector 110 from radiation. However, embodiments of the optical system may also be implemented where the detector is to be cold shielded in addition to radiation shielded. For example, the housing 120 may incorporate or may be included within a cold shielding chamber, such as a cryo-vac Dewar. The fold mirror 160 may introduce a light path that may be undesirable in cold shielded applications. Accordingly, baffling may be introduced around the fold mirror(s) or detector for stray light rejection within the housing 120. The fold mirror may also include a coating or other surface treatment to reduce out-of-band reflections.

Having described above several aspects of at least one embodiment, it is to be appreciated various alterations, modifications, and improvements will readily occur to those skilled in the art. Such alterations, modifications, and improvements are intended to be part of this disclosure and are intended to be within the scope of the invention. Accordingly, the foregoing description and drawings are by way of example only, and the scope of the invention should be determined from proper construction of the appended claims.

## Claims

1. A radiation shielded optical system comprising:
a labyrinthine housing (120) having an entrance and defining a cavity;
a detector (110) positioned within the cavity of the housing, the housing configured to provide substantially 4-pi steradian radiation shielding for the detector;
a rear-stopped optical sub-system (130) having a rear aperture stop positioned proximate the entrance of the housing and configured to direct an optical beam through the rear aperture stop and the entrance into the housing; and
a fold mirror (160) positioned within the housing and configured to reflect the optical beam onto the detector.

2. The radiation shielded optical system of claim 1, wherein the rear-stopped optical sub-system (130) is a rear-stopped reflective optical sub-system.

3. The radiation shielded optical system of claim 2, wherein the rear-stopped reflective optical system (130) is a reflective triplet.

4. The radiation shielded optical system of claim 3, wherein the reflective triplet includes:
a positive power primary mirror;
a negative power secondary mirror optically coupled to the primary mirror; and
a positive power tertiary mirror optically coupled to the secondary mirror.

5. The radiation shielded optical system of claim 4, wherein the tertiary mirror receives the optical beam from the secondary mirror and reflects the optical beam through the rear aperture stop.

6. The radiation shielded optical system of any one of claim 3, 4 or 5, wherein the detector (110) is positioned at an image plane of the optical system, and wherein the rear aperture stop is positioned approximately equidistant from the image plane and a tertiary mirror along an optical axis of the optical system.

7. The radiation shielded optical system of any preceding claim, wherein the detector (110) is a focal plane array image sensor.

8. The radiation shielded optical system of any preceding claim, wherein the housing (120) comprises a graded-Z laminate material.

9. The radiation shielded optical system of any one of claims 1 to 7, wherein the housing (120) comprises a tungsten steel laminate.

10. The radiation shielded optical system of any preceding claim, wherein the housing (120) comprises a material selected to shield the detector from ionizing radiation.

11. The radiation shielded optical system of any preceding claim, wherein the fold mirror (160) is a first fold mirror, and the optical system further comprises at least one additional fold mirror positioned within the housing and configured to reflect the optical beam onto the first fold mirror.
